# EUROPEAN PATENT APPLICATION

(11) **EP 4 579 550 A1**
(43) Date of publication of application: **02.07.2025**
(21) Application number: 23307403.8
(22) Date of filing: 27.12.2023
(51) Int. Cl.: G06Q 10/087, B65B 5/10

(54) **SYSTEM FOR REORGANISING THE CONTENT OF CONTAINERS IN A STORAGE AND RETRIEVAL SYSTEM**

(71) Applicant: Exotec Product France, 59170 Croix (FR)
(72) Inventor: MOULIN, Romain, Atlanta 30306 (US); HUSTON, James, Atlanta 30319 (US); JACKSON, John, Nashville 37204 (US); EVERHART, Clayton, Atlanta 30317 (US)
(74) Representative: Plasseraud IP

(57) **Abstract**

The present disclosure relates to a system (10) for reorganizing the content of containers (5a,5b), each container (5a,5b) being configured to receive at least two sub-containers (6a,6b), the system (10) comprising:
- a station (11) for receiving a first container (5a) and a second container (5b);
- at least one gripper (12) configured to seize the sub-containers (6a,6b) from the first or second containers (5a,5b) and to move the sub-containers (6a,6b) from one of the first and second containers (5a,5b) to the other one of the first and second containers (5a,5b);
- a control unit (13) being configured to:
* receive positions information of sub-containers (6a,6b) in each of said first container (5a) and second container (5b),
* determine a sequence of movements of said at least one gripper (12) in function of said positions information,
* control said at least one gripper (12) to execute said sequence of movements.

## Description

### Field of the invention

The present disclosure relates to the field of maintenance for storage and retrieval systems in warehouses, in particular for automated storage and retrieval systems, also designated ASRS. More particularly, the present disclosure relates to a system (or sub-system of the ASRS) for reorganizing the content of containers in such an ASRS.

### Background of the invention

In the field of logistics, it is well known to build storage and retrieval systems for products, for example in warehouses, which are compact and extend in height in order to optimize the available storage space. Such a storage and retrieval system typically comprises compactly arranged storage racks designed to receive and store the products. To this end the storage racks define, within their structure, consecutive columns of cells, each cell defining a storage location. These cells are designed to receive containers, for example bins or trays, in which products are placed and stored. These products are then combined to form orders to be shipped.

More precisely, for certain types of products, particularly for bulk products such as screws or nails, it is known to use containers accommodating sub-containers able to receive a given quantity of goods. It should be understood that the container is the receptacle that is adapted to be stored and retrieved from a storage location. The sub-containers are then placed within the container. This configuration allows to easily store and retrieve bulk products. The sub-containers are generally arranged so that they prevent each other from falling over. The sub-containers may have a same size, although it is not necessarily the case.

When using such containers accommodating sub-containers, all the sub-containers of a container are generally not emptied at once. Thus, the containers in the storage locations may accommodate both sub-containers containing bulk products and empty sub-containers, which affects the occupancy rate, or the "compactness", of the storage locations.

There is therefore a need to improve the occupancy rate in such a storage and retrieval system.

### Summary of the invention

This disclosure improves the situation.

The present disclosure concerns a system for reorganizing the content of containers, each container being configured to receive at least two sub-containers, each sub-container being configured to contain bulk products.

The system comprises:
- a station for receiving a first container and a second container having a configuration wherein each one of the first and second container contains:
   *at least one empty sub-container or at least one free space able to receive a sub-container;
   *at least one non-empty sub-container;
- at least one gripper configured to seize the sub-containers from the first or second containers and to move the sub-containers from one of the first and second containers to the other one of the first and second containers;
- a control unit being configured to:
   * receive information related to the position of said at least one empty sub-container or at least one free space able to receive a sub-container in each of said first container and second container, and to the position of said at least one non-empty sub-container in each of said first container and second container,
   * determine a sequence of movements of said at least one gripper in function of said positions information, the sequence of movements comprising:
      a1/ removing said at least one non-empty sub-container from said first container, and
      a2/ at least if there is no free space in said second container, removing said at least one empty sub-container from said second container;
         then
      b1/ placing the at least one non-empty sub-container removed from said first container in a free space of said second container, and
      b2/ if there is at least one empty sub-container removed from said second container, placing it in a free space of said first container or in a buffer storage area;
      or, in place of the operation b1 or the operations b1 and b2 if applicable,
      c1/ transferring the content of the at least one non-empty sub-container removed from said first container into an empty sub-container in said second container,
   * control said at least one gripper to execute said sequence of movements.

The term container notably corresponds to a receptacle that is adapted to be stored and retrieved from a storage location. The sub-containers, for instance cups, are then placed within the container. This type of containers allows to easily store and retrieve bulk products.

The present disclosure advantageously allows to improve the occupancy rate of containers receiving sub-containers. In fact, during operation, the containers may have free space without sub-containers, or may have some sub-containers that are empty or that are not completely filled. The system according to the present disclosure allows thus to reorganize the content of the containers such that to obtain containers with sub-containers that are either all empty or all non-empty. The compactness of the containers is thus improved.

Setting-up the station allows to facilitate the reorganization of the content of the containers, as the reorganization takes place in a dedicated space. This limits the impact of the reorganization of the containers on other operations that occur in a storage and retrieval system for instance.

Moreover, the control unit allows to automatically determine the sequence of movements based on the configuration of the first and the second containers. This feature gives the advantage of automatizing and thus facilitating the reorganization of the content of the containers.

Advantageously, the control unit may be further configured, after an execution of a sequence of movements, to check if the aforementioned configuration is still true, and
- if yes, reiterate with the same first and second containers, reception of information related to new positions, determination of a new sequence of movements and control of the at least one gripper to execute said new sequence of movements,
- if no, trigger the release of at least one of the first and the second containers from the station.

In other words, the control unit may reiterate, with the same first and second containers, reception of information related to new positions, determination of a new sequence of movements and control of the at least one gripper to execute said new sequence of movements, while the first and the second containers have at least one non-empty sub-container and at least one empty sub-container or at least one free space able to receive a sub-container. Thus, while the first and the second containers have at least one non-empty sub-container and at least one empty sub-container or at least one free space able to receive a sub-container, the content of those first and second containers may still be reorganized.

Advantageously, the determination of the sequence of movements may comprise the identification of a container from said first container and second container determined to have a final configuration wherein one of said first container or said second container contains either only empty sub-containers and/or free spaces or only non-empty sub-containers.

The at least one gripper may advantageously comprise a mechanical gripper. The mechanical gripper may comprise fingers able to open and retract such that to seize the sub-container.

Alternatively, the at least one gripper may comprise a suction gripper. The suction gripper is configured to seize the sub-container by suction. This type of gripper allows to seize the sub-containers in a secure manner, and to seize sub-containers having various shapes.

The system may comprise at least two grippers configured such that operations a1, then operations b1 or c1, are made by a first gripper, while operations a2, then operation b2, are made by a second gripper. Having two grippers allows to seize sub-containers from the first container and the second container simultaneously. Thus, the reorganization of the content of the first and the second containers is performed faster than if the system only comprises one gripper for instance.

Operations a1 and a2, then operations b1 and b2 may be carried out simultaneously by the first gripper and the second gripper, respectively.

The system may advantageously comprise at least one robotic arm to operate the at least one gripper. The robotic arm allows to further automatize the reorganization of the content of the first and second containers.

Preferably, the system may comprise a single robotic arm to operate the at least two grippers. Thus, the realization of the grippers is more compact as only one robotic arm operates both grippers.

The station may cooperate with a conveyor such that to be able to receive the first container and the second container from the conveyor and to release the first container and the second container on the conveyor once the sequence of movements has been executed. This feature allows to set up the station in a place where containers transit and thus to facilitate the reception of the containers by the station.

The present disclosure also concerns a storage and retrieval system comprising storage racks or a storage grid defining storage locations for receiving containers each being configured to receive at least two sub-containers, each sub-container being configured to contain bulk products. The storage and retrieval system further comprises a system as previously defined. The first container and the second container are retrieved from their respective storage location to the station and are transported from the station either to a storage location or to another location once the sequence of movements has been executed.

The storage and retrieval system may comprise a processor able to access a data base in which the content and the configuration of the containers placed in the storage locations is memorized. The processor is configured to control the storage and the retrieval of the containers in and out the storage locations and to keep updated the database. The processor may be configured to select the first container and the second container whose content are to be reorganized in function of their respective content and configuration. Thus, the selection of the first and the second containers may be performed automatically as a function of the content and the configuration of the containers. The selected first and the second containers may then be transported to the station.

The present disclosure also concerns a method implemented in a system for reorganizing the content of containers each being configured to receive at least two sub-containers, each sub-container being configured to contain bulk products. The system comprises a station, at least one gripper and a control unit.

The method comprises:
- receiving at the station a first container and a second container having a configuration wherein each one of the first and second container contains:
   *at least one empty sub-container or at least one free space able to receive a sub-container;
   *at least one non-empty sub-container;
- receiving information related to the position of said at least one empty sub-container or at least one free space able to receive a sub-container in each of said first container and second container, and to the position of said at least one non-empty sub-container in each of said first container and second container,
- determining a sequence of movements of said at least one gripper in function of said positions information, the sequence of movements comprising:
   a1/ removing said at least one non-empty sub-container from said first container, and
   a2/ at least if there is no free space in said second container, removing said at least one empty sub-container from said second container;
      then
   b1/ placing the at least one non-empty sub-container removed from said first container in a free space of said second container, and
   b2/ if there is at least one empty sub-container removed from said second container, placing it in a free space of said first container or in a buffer storage area;
   or, in place of the operation b1 or the operations b1 and b2 if applicable,
   c1/ transferring the content of the at least one non-empty sub-container removed from said first container into an empty sub-container in said second container,
- controlling the at least one gripper to execute said sequence of movements.

The method may advantageously comprise selecting beforehand the first container and the second container such that between 40% et 60% of the sub-containers respectively accommodated in the first container and in the second container are non-empty, each respective container having the remaining space able to receive a sub-container, each receiving an empty sub-container or being a free space.

Selecting the first container and the second container may be performed such that a number of non-empty sub-containers of the first container is equal to a number of empty sub-containers of the second container.

Determining the sequence of movements may advantageously be performed such as to minimize a number of movements.

### List of figures

Further features, details and advantages will become apparent from the detailed description below, and from an analysis of the appended drawings, on which:
[Fig. 1] schematically illustrates a view of an example of a storage and retrieval system.
[Fig. 2] schematically illustrates a view of an example of a container accommodating sub-containers according to an embodiment.
[Fig. 3] shows a schematic diagram of a system for reorganizing the content of containers according to an embodiment.
[Fig. 4] schematically illustrates a view of an example of the system for reorganizing the content of containers according to an embodiment.
[Fig. 5] schematically illustrates a view of an example of the system for reorganizing the content of containers according to another embodiment.
[Fig. 6] schematically illustrates steps of a method for reorganizing the content of containers according to an embodiment.

### Detailed description of the invention

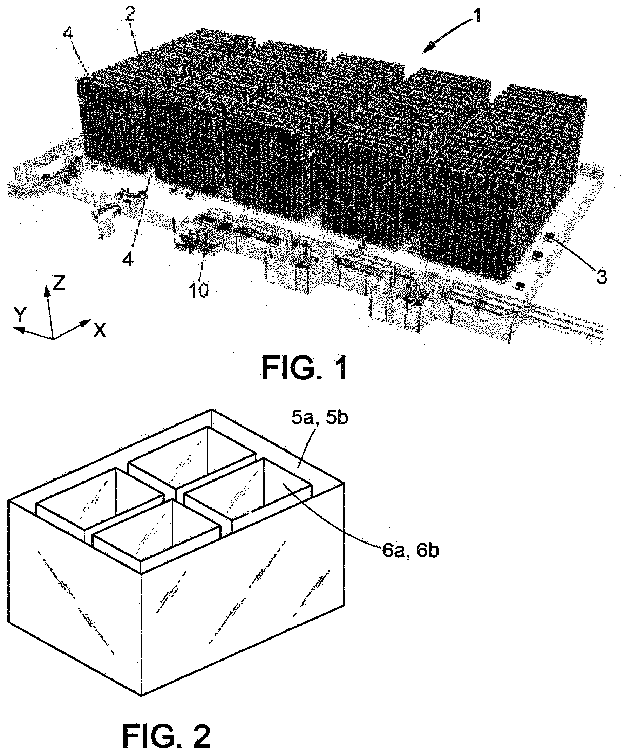

Reference is now made to Figure 1 schematically representing an example of a storage and retrieval system 1, for example in a warehouse or a facility, according to one aspect of the present disclosure. According to another aspect, the present disclosure relates to a system for reorganizing the content of containers, in particular for such a storage and retrieval system 1.

In particular, the storage and retrieval system 1 comprises at least two, and in particular several, storage racks 2, which may also be referred to as "shelving", designed to receive products for storage. The storage racks 2 define storage locations intended to receive one or more containers. The storage and retrieval system 1 may comprise a processor able to access a database in which the content and the configuration of the containers placed in the storage locations is memorized. The processor is configured to control the storage and the retrieval of the containers in and out the storage locations and to keep updated the database. Such a system may be an automated storage and retrieval system, also referred to as ASRS. In such a system, the placement and the retrieval of the containers is performed automatically and is commanded by the processor.

The storage and retrieval system 1 may further comprise automated guided vehicles 3, also referred to as AGV, controlled by the processor. The automated guided vehicles are configured to place and retrieve the containers from the storage locations.

The figure 2 illustrates the containers 5a,5b, each being configured to receive at least two sub-containers 6a,6b. Each sub-container 6a,6b is configured to contain bulk products, such as screws or nails, or even powdery or liquid products.

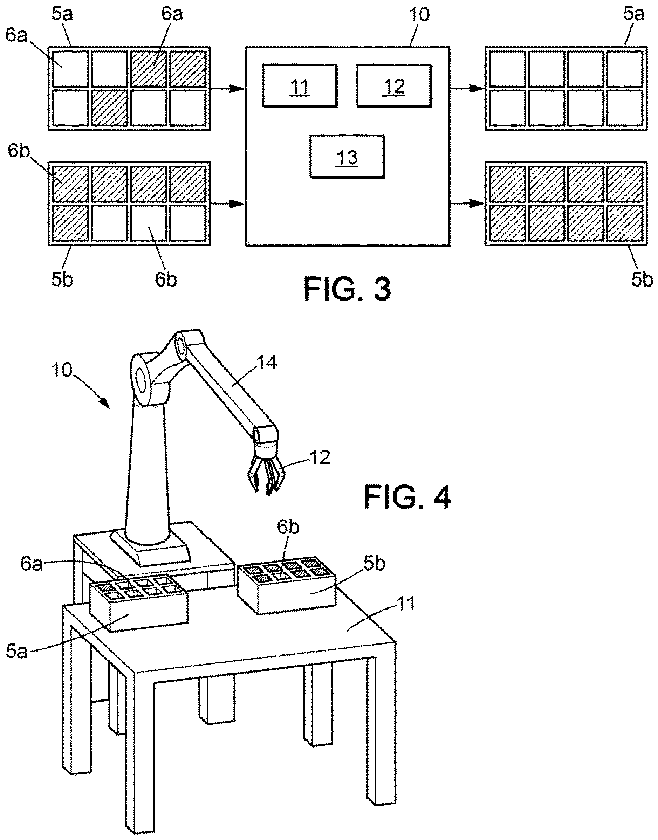

Figure 3 schematically illustrates the system 10 according to the present disclosure. The system 10 comprises a station 11 for receiving a first container 5a and a second container 5b having a configuration wherein each one of the first and second container 5a,5b contains:
*at least one empty sub-container 6a,6b or at least one free space able to receive a sub-container 6a, 6b;
*at least one non-empty sub-container 6a,6b.

The first container 5a and the second container 5b may be retrieved from their respective storage location to the station 11 and being transported from the station 11 either to a storage location or to another location once a sequence of movements of the sub-containers has been executed. For instance, the containers having only empty sub-containers may be transported to a specific area receiving only such containers ready to be repaired, cleaned and/or reused.

The processor may be configured to select the first container 5a and the second container 5b whose content are to be reorganized in function of their respective content and configuration. Thus, the selection of the first and the second containers may be performed automatically as a function of the content and the configuration of the containers. The selected first and second containers may then be transported to the station 11.

The system 10 comprises at least one gripper 12 configured to seize the sub-containers 6a,6b from the first or second containers 5a,5b and to move the sub-containers 6a,6b from one of the first and second containers 5a,5b to the other one of the first and second containers 5a,5b.

Moreover, the system 10 comprises a control unit 13 being configured to:
* receive information related to the position of said at least one empty sub-container 6a,6b or at least one free space able to receive a sub-container 6a, 6b in each of said first container 5a and second container 5b, and to the position of said at least one non-empty sub-container 6a,6b in each of said first container 5a and second container 5b,
* determine a sequence of movements of said at least one gripper 12 in function of said positions information,
* control said at least one gripper 12 to execute said sequence of movements.

The sequence of movements comprises:
a1/ removing said at least one non-empty sub-container 6a from said first container 5a, and
a2/ at least if there is no free space in said second container 5b, removing said at least one empty sub-container 6b from said second container 5b;
   then
b1/ placing the at least one non-empty sub-container 6a removed from said first container 5a in a free space of said second container 5b, and
b2/ if there is at least one empty sub-container 6b removed from said second container 5b, placing it in a free space of said first container 5a or in a buffer storage area;
or, in place of the operation b1 or the operations b1 and b2 if applicable,
c1/ transferring the content of the at least one non-empty sub-container 6a removed from said first container 5a into an empty sub-container 6b in said second container 5b,

The present disclosure advantageously allows to improve the occupancy rate of containers receiving sub-containers. In fact, during operation, the containers may have free space without sub-containers, or may have some sub-containers that are empty or that are not completely filled. The system according to the present disclosure allows thus to reorganize the content of the containers such that to obtain containers with sub-containers that are either all empty or all non-empty. The compactness of the containers is thus improved.

Setting-up the station allows to facilitate the reorganization of the content of the containers, as the reorganization takes place in a dedicated space. This limits the impact of the reorganization of the containers on other operations that occur in a storage and retrieval system for instance.

Moreover, the control unit allows to automatically determine the sequence of movements based on the configuration of the first and the second containers. This feature gives the advantage of automatizing and thus facilitating the reorganization of the content of the containers.

The present disclosure allows either to replace a sub-container of the first container with another sub-container of the second container or to transfer the content of a sub-container of the first container to another sub-container of the second container.

The control unit 13 may be further configured, after an execution of a sequence of movements, to check if the aforementioned configuration is still true, and
- if yes, reiterate with the same first and second containers 5a, 5b, reception of information related to new positions, determination of a new sequence of movements and control of the at least one gripper to execute said new sequence of movements,
- if no, trigger the release of at least one of the first and the second containers 5a, 5b from the station 11.

In other words, the control unit 13 may reiterate, with the same first 5a and second 5b containers, reception of information related to new positions, determination of a new sequence of movements and control of the at least one gripper to execute said new sequence of movements, while the first 5a and the second 5b containers have at least one non-empty sub-container and at least one empty sub-container or at least one free space able to receive a sub-container. Thus, while the first and the second containers have at least one non-empty sub-container and at least one empty sub-container or at least one free space able to receive a sub-container, the content of those first and second containers may still be reorganized.

Furthermore, the determination of the sequence of movements may comprise the identification of a container from said first container 5a and second container 5b determined to have a final configuration wherein one of said first container or said second container contains either (i) only empty sub-containers 6a,6b and/or free spaces or (ii) only non-empty sub-containers 6a,6b.

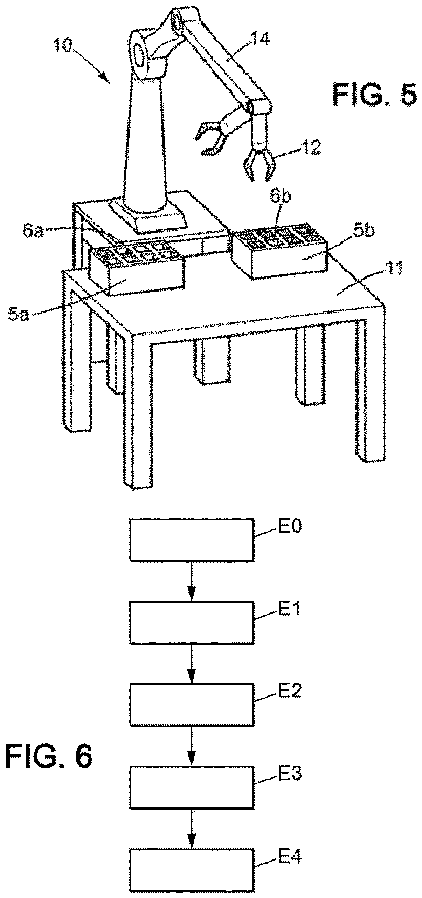

The figures 4 and 5 illustrates two examples of the system 10 according to the present disclosure.

The at least one gripper 12 may comprise a mechanical gripper. The mechanical gripper may comprise fingers able to open and retract such that to seize the sub-container.

Alternatively, the at least one gripper 12 may advantageously comprise a suction gripper. The suction gripper is configured to seize the sub-container by suction. This type of gripper allows to seize the sub-containers in a secure manner, and to seize sub-containers having various shapes.

The system 10 may comprise a single gripper 12, as illustrated in figure 4.

Alternatively, the system may preferably comprise at least two grippers 12 configured such that operations a1, then operations b1 or c1, are made by a first gripper 12, while operations a2, then operation b2, are made by a second gripper 12. The figure 5 illustrates such a system 10 comprising two grippers. Having two grippers allows to seize sub-containers from the first container and the second container simultaneously. For example with a 180° rotation, the positions of the two grippers can be inverted. Thus, the reorganization of the content of the first and the second containers is performed faster than if the system only comprises one gripper for instance.

Operations a1 and a2, then operations b1 and b2 may be carried out simultaneously by the first gripper and the second gripper, respectively.

The system 10 may comprise at least one robotic arm 14 to operate the at least one gripper 12, as represented in both figures 4 and 5. The robotic arm allows to further automatize the reorganization of the content of the first and second containers.

In a preferred manner, the system 10 may comprise a single robotic arm to operate the at least two grippers 12 as represented in figure 5. Thus, the realization of the grippers is more compact as only one robotic arm operates both grippers.

Moreover, the station 11 may cooperate with a conveyor such that to be able to receive the first container 5a and the second container 5b from the conveyor and to release the first container 5a and the second container 5b on the conveyor once the sequence of movements has been executed. This feature allows to set up the station in a place where containers transit and thus to facilitate the reception of the containers by the station.

The figure 6 illustrates a method according to another aspect of the present disclosure, the method being implemented in the system 10.

The method comprises:
- receiving E1 at the station 11 a first container 5a and a second container 5b having a configuration wherein each one of the first and second container 5a,5b contains:
   *at least one empty sub-container 6a,6b or at least one free space able to receive a sub-container 6a, 6b;
   *at least one non-empty sub-container 6a,6b;
- receiving information related to E2 the position of said at least one empty sub-container 6a,6b or at least one free space able to receive a sub-container 6a, 6b in each of said first container 5a and second container 5b, and to the position of said at least one non-empty sub-container 6a,6b in each of said first container 5a and second container 5b,
- determining E3 a sequence of movements of said at least one gripper 12 in function of said positions information, the sequence of movements comprising:
   a1/ removing said at least one non-empty sub-container 6a from said first container 5a, and
   a2/ at least if there is no free space in said second container 5b, removing said at least one empty sub-container 6b from said second container 5b;
      then
   b1/ placing the at least one non-empty sub-container 6a removed from said first container 5a in a free space of said second container 5b, and
   b2/ if there is at least one empty sub-container 6b removed from said second container 5b, placing it in a free space of said first container 5a or in a buffer storage area;
   or, in place of the operation b1 or the operations b1 and b2 if applicable,
   c1/ transferring the content of the at least one non-empty sub-container 6a removed from said first container 5a into an empty sub-container 6b in said second container 5b,
- controlling E4 the at least one gripper 12 to execute said sequence of movements.

The method may advantageously comprise selecting E0 beforehand the first container 5a and the second container 5b such that between 40% et 60% of the sub-containers 6a,6b respectively accommodated in the first container 5a and in the second container 5b are non-empty, each respective container 5a,5b having the remaining space able to receive a sub-container 6a, 6b, each receiving an empty sub-container 6a,6b or being a free space. Selecting E0 the first container 5a and the second container 5b may notably be performed by the processor of the storage and retrieval system.

Selecting E0 the first container 5a and the second container 5b may be performed such that a number of non-empty sub-containers 6a of the first container 5a is equal to a number of empty sub-containers 6b of the second container 5b.

Determining E3 the sequence of movements may advantageously be performed such as to minimize a number of movements.

A specific example on how to determine which one of a first container 5a and second container 5b, each containing eight sub-containers 6a,6b, shall contain only empty sub-containers or only non empty-sub is described hereunder:

The first container 5a contains nₐₑ empty sub-containers and n_{af} non-empty sub-containers, with n_{ae +} n_{af} = 8. The second container 5b contains n_{be} empty sub-containers and n_{bf} non-empty sub-containers, with n_{be +} n_{bf} = 8.

To make the container 5a containing only empty sub-containers, the number of required movements is MOVEMENTS_NEEDED = n_{af} and it is possible only if n_{be} ≥ n_{af.}

To make the container 5a containing only non-empty sub-containers, the number of required movements is MOVEMENTS_NEEDED = nₐₑ and it is possible only if n_{bf} ≥ nₐₑ

To make the container 5b containing only empty sub-containers, the number of required movements is MOVEMENTS_NEEDED = n_{bf} and it is possible only if nₐₑ ≥ n_{bf.}

To make the container 5b containing only non-empty sub-containers, the number of required movements is MOVEMENTS_NEEDED = n_{be} and it is possible only if n_{af} ≥ n_{be.}

By identifying the smallest MOVEMENTS_NEEDED among the four scenarios, it can be determined which container shall comprise only empty sub-container or non-empty sub-containers. The sequences of movements is correspondingly executed.

## Claims

1. A system (10) for reorganizing the content of containers (5a,5b), each container (5a,5b) being configured to receive at least two sub-containers (6a,6b), each sub-container (6a,6b) being configured to contain bulk products, wherein the system (10) comprises:
- a station (11) for receiving a first container (5a) and a second container (5b) having a configuration wherein each one of the first and second container (5a,5b) contains:
*at least one empty sub-container (6a,6b) or at least one free space able to receive a sub-container (6a, 6b);
*at least one non-empty sub-container (6a,6b);
- at least one gripper (12) configured to seize the sub-containers (6a,6b) from the first or second containers (5a,5b) and to move the sub-containers (6a,6b) from one of the first and second containers (5a,5b) to the other one of the first and second containers (5a,5b);
- a control unit (13) being configured to:
* receive information related to the position of said at least one empty sub-container (6a,6b) or at least one free space able to receive a sub-container (6a, 6b) in each of said first container (5a) and second container (5b), and to the position of said at least one non-empty sub-container (6a,6b) in each of said first container (5a) and second container (5b),
* determine a sequence of movements of said at least one gripper (12) in function of said positions information, the sequence of movements comprising:
a1/ removing said at least one non-empty sub-container (6a) from said first container (5a), and
a2/ at least if there is no free space in said second container (5b), removing said at least one empty sub-container (6b) from said second container (5b);
then
b1/ placing the at least one non-empty sub-container (6a) removed from said first container (5a) in a free space of said second container (5b), and
b2/ if there is at least one empty sub-container (6b) removed from said second container (5b), placing it in a free space of said first container (5a) or in a buffer storage area;
or, in place of the operation b1 or the operations b1 and b2 if applicable,
c1/ transferring the content of the at least one non-empty sub-container (6a) removed from said first container (5a) into an empty sub-container (6b) in said second container (5b),
* control said at least one gripper (12) to execute said sequence of movements.

2. The system (10) according to claim 1, wherein the control unit (13) is further configured, after an execution of a sequence of movements, to check if the aforementioned configuration is still true, and
- if yes, reiterate with the same first and second containers (5a, 5b), reception of information related to new positions, determination of a new sequence of movements and control of the at least one gripper to execute said new sequence of movements,
- if no, trigger the release of at least one of the first and the second containers (5a, 5b) from the station (11).

3. The system (10) according to any one of the preceding claims, wherein the determination of the sequence of movements comprises the identification of a container from said first container (5a) and second container (5b) determined to have a final configuration wherein one of said first container or said second container contains either (i) only empty sub-containers (6a,6b) and/or free spaces or (ii) only non-empty sub-containers (6a,6b).

4. The system (10) according to any one of the preceding claims, comprising at least two grippers (12) configured such that operations a1, then operations b1 or c1, are made by a first gripper (12), while operations a2, then operation b2, are made by a second gripper (12).

5. The system (10) according to claim 4, wherein operations a1 and a2, then operations b1 and b2 are carried out simultaneously by the first gripper and the second gripper, respectively.

6. The system (10) according to any one of the preceding claims, comprising at least one robotic arm (14) to operate the at least one gripper (12).

7. The system (10) according to any one of claims 4 to 5, comprising a single robotic arm to operate the at least two grippers (12).

8. The system (10) according to any one of the preceding claims, wherein the station (11) cooperates with a conveyor such that to be able to receive the first container (5a) and the second container (5b) from the conveyor and to release the first container (5a) and the second container (5b) on the conveyor once at least one sequence of movements has been executed.

9. A storage and retrieval system (1) comprising storage racks (2) defining storage locations for receiving containers (5a,5b) each being configured to receive at least two sub-containers (6a,6b), each sub-container (6a,6b) being configured to contain bulk products, the storage and retrieval system (1) further comprising a system (10) according to any one of the preceding claims, the first container (5a) and the second container (5b) being retrieved from their respective storage location to the station (11) and being transported from the station (11) either to a storage location or to another location once at least one sequence of movements has been executed by said system.

10. The storage and retrieval system (1) according to the preceding claim, comprising a processor able to access a database in which the content and the configuration of the containers (5a,5b) placed in the storage locations is memorized, the processor being configured to control the storage and the retrieval of the containers in and out the storage locations and to keep updated the database, the processor being further configured to select the first container (5a) and the second container (5b) whose content are to be reorganized in function of their respective content and configuration.

11. A method implemented in a system (10) for reorganizing the content of containers (5a,5b) each being configured to receive at least two sub-containers (6a,6b), each sub-container (6a,6b) being configured to contain bulk products, the system (10) comprising a station (11), at least one gripper (12) and a control unit (13),
the method comprising:
- receiving (E1) at the station (11) a first container (5a) and a second container (5b) having a configuration wherein each one of the first and second container (5a,5b) contains:
*at least one empty sub-container (6a,6b) or at least one free space able to receive a sub-container (6a, 6b);
*at least one non-empty sub-container (6a,6b);
- receiving information related to (E2) the position of said at least one empty sub-container (6a,6b) or at least one free space able to receive a sub-container (6a, 6b) in each of said first container (5a) and second container (5b), and to the position of said at least one non-empty sub-container (6a,6b) in each of said first container (5a) and second container (5b),
- determining (E3) a sequence of movements of said at least one gripper (12) in function of said positions information, the sequence of movements comprising:
a1/ removing said at least one non-empty sub-container (6a) from said first container (5a), and
a2/ at least if there is no free space in said second container (5b), removing said at least one empty sub-container (6b) from said second container (5b);
then
b1/ placing the at least one non-empty sub-container (6a) removed from said first container (5a) in a free space of said second container (5b), and
b2/ if there is at least one empty sub-container (6b) removed from said second container (5b), placing it in a free space of said first container (5a) or in a buffer storage area;
or, in place of the operation b1 or the operations b1 and b2 if applicable,
c1/ transferring the content of the at least one non-empty sub-container (6a) removed from said first container (5a) into an empty sub-container (6b) in said second container (5b),
- controlling (E4) the at least one gripper (12) to execute said sequence of movements.

12. The method according to claim 11, comprising selecting (E0) beforehand the first container (5a) and the second container (5b) such that between 40% et 60% of the sub-containers (6a,6b) respectively accommodated in the first container (5a) and in the second container (5b) are non-empty, each respective container (5a,5b) having the remaining space able to receive a sub-container (6a, 6b) each receiving an empty sub-container (6a,6b) or being a free space.

13. The method according to claim 12, wherein selecting (E0) the first container (5a) and the second container (5b) is performed such that a number of non-empty sub-containers (6a) of the first container (5a) is equal to a number of empty sub-containers (6b) of the second container (5b).

14. The method according to any of the claims 11 to 13, wherein determining (E3) the sequence of movements is performed such as to minimize a number of movements.
